# EUROPEAN PATENT SPECIFICATION

(11) **EP 0 380 973 B1**
(45) Date of publication and mention of the grant of the patent: **22.09.1993**
(21) Application number: 90101000.9
(22) Date of filing: 18.01.1990
(51) Int. Cl.: C04B 38/06, C04B 41/88

(54) **Reinforced materials**
Verstärkte Materialien
Matériaux renforcés

(30) Priority: 31.01.1989 GB 8902050
(43) Date of publication of application: 08.08.1990
(73) Proprietor: T&N TECHNOLOGY LIMITED, Rugby Warwickshire, CV22 7SB (GB)
(72) Inventor: Hyndman, Christopher Patrick, Rugby Warwickshire CV22 5JW (GB); Allen, Gordon Leonard, Rugby Warwickshire (GB)
(74) Representative: Goddard, David John

(56) References cited:
- EP-A- 0 298 378
- DE-A- 3 804 124
- FR-A- 1 600 816
- GB-A- 938 861
- GB-A- 2 105 316
- GB-A- 2 105 317
- US-A- 4 579 699

## Description

The present invention relates to a method of making a reinforced metallic material by producing a porous ceramic body comprising particulate or short fibre material and, infiltrating the porous body with a molten metal, thereby providing a material with a metal matrix.

Advantageous mechanical and thermal properties may be produced in materials having a metallic matrix and containing particles or fibres of ceramic material. Known methods for the production of such materials include that known as mechanical alloying of powders, other methods including those based on powder metallurgy, metal spraying techniques and slurry casting are also known.

US 4,579,699A discloses a method of producing alpha-silicon nitride whiskers and reinforced articles made therefrom, i.e. single-crystal fibres with a length to thickness ration of at least 100, as a porous compact which may be impregnated with a liquid metal. The compact is produced by blending silicon with amorphous silicon nitride and pore-forming composition particles. The mixture is compacted to a desired shape, the pore-forming particles are removed to form a porous precursor compact. The precursor compact is then reacted with a substance that releases free nitrogen to form silicon nitride whiskers.

GB 2,105,316A describes a method particularly suitable for producing silicon nitride catalyst support stones having a high degree of open porosity. The method comprises forming a preform of silicon powder, a liquid binder and a filler composed of material adapted for burn-out or vaporization at temperatures at which silicon powder reaction in air is negligible. The filler is displaced at 750°C, and the resulting porous silicon body is nitrided by heating in a nitrogen atmosphere.

The invention provides a method of making a reinforced metallic material, the method comprising producing a porous silicon body by forming a mixture from a desired proportion of a particulate or short fibre silicon reinforcing agent precursor material with desired proportions of a filler material, adapted to be burnt off to produce voids, a liquid first binder material, adapted to bind the mixture, and a second binder material, adapted on heating to form inter-particle bonds with said particulate or short fibre silicon material, filling a mould with a mixture of the materials, drying the mixture for a period of time at less than 100°C, heating the dried mixture to burn off the filler material to produce voids and to form inter-particle bonds between said particulate or short fibre silicon material and said second binder material, the method also comprising converting said porous silicon body to either a silicon nitride or a silicon carbide porous ceramic body by means of a controlled atmosphere heating step, and infiltrating said porous ceramic body with a molten metal.

The heating step may be carried out in an argon atmosphere in which case the filler material is adapted to decompose in the heating step to leave carbon which is utilised to form silicon carbide in the conversion step. The first binder material may also be adapted to decompose in the heating step to leave carbon which is utilised to form silicon carbide in the conversion step.

The heating step may, alternatively, be carried out in an air atmosphere to produce a carbon-free body suitable for conversion to silicon nitride.

Prior to conversion of a precursor material to the reinforcing agent and after the filler material has been burnt off, the body may be machined to a desired shape.

The filler material may be polyethylene spheres, polymethylmethacrylate etc. Other suitable organic filler materials such as, polystyrene, may alternatively be used.

An example of a suitable liquid first binder material is aqueous methyl cellulose formed with warm water. This material enables a mixture of dough-like consistency to be produced for subsequent moulding.

An example of a suitable second binder material is aqueous silica sol which provides a medium for inter-particle bonding in the body prior to infiltration with a metal matrix.

The degree of porosity may be controlled by means of the particle size and quantity of the filler material.

The molten metal may be an aluminium alloy such as one from the well known 2000, 6000 and 7000 series of aluminium alloys.

The infiltrated body may, if desired, be worked by, for example, forging, extrusion or any other appropriate processes for the manufacture of wrought materials. Where the infiltrated material is to be worked, the heating step during production of the inter-particle bonds in the porous body may be only sufficient to allow the porous body to be handled and infiltrated without significant effect on the shape or volume, for example. Subsequent working will, therefore, allow the complete rupture of the inter-particle bonds.

In order that the present invention may be more fully understood examples will now be described by way of illustration only.

### Example 1

A reinforced metallic material was made by first producing a porous silicon body using the following procedure. A mixture was made of a particulate silicon reinforcing agent precursor material (38g. of commercial silicon powder having an 11 micrometre particle size), a filler material (75g. of polyethylene spheres of about 450 micrometres diameter), a liquid first binder material, and a second binder material. The second binder material was 5.5g. of aqueous silica sol and the first binder material was sufficient aqueous methyl cellulose solution to allow the whole mixture to be worked into a paste of dough-like consistency. A cylindrical mould was filled with the resulting mixture using hand pressure, the mixture in the mould was then dried at 90°C to drive off the water thereby drying the first binder material. The dried mixture compact was removed from the mould and heated to burn off the filler material to produce voids. The heating was in a vacuum furnace over a period of 5 hours to a temperature of 500°C under an argon atmosphere. The temperature was held at 500°C for 2 hours then raised at a rate of 100°C/hour to 1020°C where it was maintained for 5 hours. The body was then allowed to cool to room temperature in the furnace.

At this stage the body is saturated with carbon from the methyl cellulose and polyethylene which has been decomposed. The body was now amenable to shaping prior to further heat treatment.

Next, the porous silicon body was converted to a silicon carbide porous ceramic body by means of a controlled atmosphere heating step. Specifically, the body was passed through a cycle commonly used for the nitriding of silicon, during which cycle, due to the presence of carbon, the silicon converted to silicon carbide. The cycle comprised raising the temperature of the body to approximately 1430°C under a nitrogen atmosphere.

Next, the porous ceramic body was infiltrated with a molten metal, specifically an aluminium silicon alloy, by squeeze casting. The body was pre-heated to between 600°C and 800°C and the molten metal at about 720°C was poured on to the body in the squeeze casting die. The squeeze casting pressure was about 124 MPa.

The resulting infiltrated body consisted of about 25% by volume of particulate reinforcement.

### Example 2

Example 2 was the same as Example 1 except that the heat treatment at 500°C and at 1020°C was in air rather than argon. The effect of this was to burn off the polyethylene and methyl cellulose leaving an essentially carbon free body. During the resulting heating cycle under the nitrogen atmosphere the silicon particles were converted to silicon nitride instead of silicon carbide.

## Claims

1. A method of making a reinforced metallic material, the method comprising producing a porous silicon body by forming a mixture from a desired proportion of a particulate or short fibre silicon reinforcing agent precursor material with desired proportions of a filler material, adapted to be burnt off to produce voids, a liquid first binder material, adapted to bind the mixture, and a second binder material, adapted on heating to form inter-particle bonds with said particulate or short fibre silicon material, filling a mould with a mixture of the materials, drying the mixture for a period of time at less than 100°C, heating the dried mixture to burn off the filler material to produce voids and to form inter-particle bonds between said particulate or short fibre silicon material and said second binder material, the method also comprising converting said porous silicon body to either a silicon nitride or a silicon carbide porous ceramic body by means of a controlled atmosphere heating step, and infiltrating said porous ceramic body with a molten metal.

2. A method according to Claim 1, characterised in that the heating step is carried out in an argon atmosphere and the filler material is adapted to decompose in the heating step to leave carbon which is utilised to form silicon carbide in the conversion step.

3. A method according to Claim 2, characterised in that the first binder material is also adapted to decompose in the heating step to leave carbon which is utilised to form silicon carbide in the conversion step.

4. A method according to Claim 1, characterised in that the heating step is carried out in an air atmosphere.

5. A method according to any one of Claims 1-4, characterised in that the body is machined to a desired shape after the filler material has been burnt off.

6. A method according to any one of Claims 1 to 5, characterised in that the filler material is selected from the group comprising polyethylene, polystyrene and polymethylmethacrylate.

7. A method according to any one of Claims 1 to 6, characterised in that the liquid first binder material is aqueous methyl cellulose.

8. A method according to any one of Claims 1 to 7, characterised in that the second binder material is aqueous silica sol.

9. A method according to any one of Claims 1 to 8, characterised in that the metal is selected from the group of aluminium alloys comprising the 2000, 6000 and 7000 series.

## Patentansprüche

1. Verfahren zur Herstellung eines verstärkten metallischen Materials, umfassend die Herstellung eines porösen Siliciumkörpers durch Bilden eines Gemisches aus einem gewünschten Verhältnis von einem teilchenförmigen oder kurzfaserigen Vorläufermaterial aus Verstärkungsmittel aus Silicium mit einem gewünschten Verhältnis eines Füllmaterials, das zum Abbrennen unter Bildung von Lücken angepaßt ist, einem flüssigen ersten Bindermaterial, das zum Binden des Gemisches angepaßt ist und einem zweiten Bindermaterial, das so angepaßt ist, daS es beim Erhitzen mit diesem teilchenförmigen oder kurzfaserigen Siliciummaterial Zwischen-Teilchenbindungen bildet, Füllen einer Gußform mit einem Gemisch der Materialien, Trocknen des Gemisches für eine Zeitspanne bei weniger als 100°C, Erhitzen der getrockneten Mischung, um das Füllmaterial abzubrennen und Lücken und Zwischen-Teilchenbindungen zwischen diesem teilchenförmigen oder kurzfaserigen Siliciummaterial und diesem zweiten Bindermaterial zu bilden, wobei das Verfahren auch die Überführung dieses porösen Siliciumkörpers in einen porösen Keramikkörper entweder aus Siliciumnitrid oder Siliciumcarbid mittels einer Erhitzungsstufe bei kontrollierter Atmosphäre und das Infiltrieren dieses porösen Keramikkörpers mit einem geschmolzenem Metall umfaßt.

2. Verfahren nach Anspruch 1, dadurch gekennzeichnet, daS die Erhitzungsstufe in einer Argonatmosphäre durchgeführt wird und das Füllmaterial so angepaßt ist, daS es sich in der Erhitzungsstufe unter Hinterlassung von Kohlenstoff zersetzt, der zur Bildung von Siliciumcarbid in der Umwandlungsstufe verwendet wird.

3. Verfahren nach Anspruch 2, dadurch gekennzeichnet, daß das erste Bindermaterial auch dazu angepaßt ist, sich in der Erhitzungsstufe unter Hinterlassung von Kohlenstoff zu zersetzen, der zur Bildung von Siliciumcarbid in der Umwandlungsstufe verwendet wird.

4. Verfahren nach Anspruch 1, dadurch gekennzeichnet, daß die Erhitzungsstufe in einer Luftatmosphäre ausgeführt wird.

5. Verfahren nach einem der vorhergehenden Ansprüche 1 bis 4, dadurch gekennzeichnet, daß der Körper maschinell zu einer gewünschten Form bearbeitet wird, nachdem das Füllmaterial abgebrannt ist.

6. Verfahren nach einem der vorhergehenden Ansprüche 1 bis 5, dadurch gekennzeichnet, daß das Füllmaterial ausgewählt ist aus Polyethylen, Polystyrol und Polymethylmethacrylat.

7. Verfahren nach einem der vorhergehenden Ansprüche 1 bis 6, dadurch gekennzeichnet, daß das flüssige erste Bindermaterial wäßrige Methylcellulose ist.

8. Verfahren nach einem der vorhergehenden Ansprüche 1 bis 7, dadurch gekennzeichnet, daß das zweite Bindermaterial wäßriges Siliciumdioxid-Sol ist.

9. Verfahren nach einem der vorhergehenden Ansprüche 1 bis 8, dadurch gekennzeichnet, daß das Metall ausgewählt ist aus der Gruppe der Aluminiumlegierungen der Serien 2000, 6000 und 7000.

## Revendications

1. Procédé de fabrication d'un matériau métallique renforcé, le procédé comprenant les opérations consistant à produire un corps de silicium poreux en formant un mélange à partir d'une proportion souhaitée d'un précurseur d'agent de renfort de silicium fait de particules ou de fibres courtes avec les proportions souhaitées d'une charge, adaptée à être éliminée par combustion pour produire des vides, d'un premier liant liquide, adapté à lier le mélange, et d'un second liant, adapté à être chauffé pour former des liaisons entre les particules avec ledit silicium fait de particules ou de fibres courtes, remplir un moule d'un mélange des matériaux, faire sécher le mélange pendant une certaine durée à moins de 100°C, chauffer le mélange séché pour éliminer par combustion la charge afin de produire des vides et de former des liaisons entre les particules entre ledit silicium fait de particules ou de fibres courtes et ledit second liant, le procédé comprenant aussi les opérations consistant à transformer ledit corps de silicium poreux soit en un nitrure de silicium ou en un corps de céramique poreux de carbure de silicium au moyen d'une opération de chauffage en atmosphère contrôlée, et imprégner ledit corps de céramique poreux d'un métal fondu.

2. Procédé selon la revendication 1, caractérisé en ce que l'opération de chauffage est effectuée dans une atmosphère d'argon et la charge est adaptée à se décomposer durant l'opération de chauffage pour laisser du carbone qui est utilisé pour former du carbure de silicium durant la phase de transformation.

3. Procédé selon la revendication 2, caractérisé en ce que le premier liant est également adapté à se décomposer durant l'opération de chauffage pour laisser du carbone qui est utilisé pour former du carbure de silicium durant la phase de transformation.

4. Procédé selon la revendication 1, caractérisé en ce que l'opération de chauffage est effectuée dans une atmosphère d'air.

5. Procédé selon l'une quelconque des revendications 1 à 4, caractérisé en ce que le corps est usiné à une forme souhaitée une fois la charge éliminée par combustion.

6. Procédé selon l'une quelconque des revendications 1 à 5, caractérisé en ce que la charge est sélectionnée parmi le groupe comprenant le polyéthylène, le polystyrène et le polyméthylméthacrylate.

7. Procédé selon l'une quelconque des revendications 1 à 6, caractérisé en ce que le premier liant liquide est de la méthylcellulose aqueuse.

8. Procédé selon l'une quelconque des revendications 1 à 7, caractérisé en ce que le second liant est une solution de silice aqueuse.

9. Procédé selon l'une quelconque des revendications 1 à 8, caractérisé en ce que le métal est sélectionné parmi le groupe d'alliages d'aluminium comprenant la série 2000, 6000 et 7000.
